# FASCICULE DE BREVET EUROPEEN

(11) **EP 1 343 236 B1**
(45) Date de publication et mention de la délivrance du brevet: **10.05.2017**
(21) Numéro de dépôt: 03290556.4
(22) Date de dépôt: 07.03.2003
(51) Int. Cl.: H02G 3/08, H02G 3/10

(54) **Dispositif de montage d'appareillages électriques à support pivotant**
Vorrichtung zum Montieren von elektrischen Apparaten mit einem Scharnier
Device for mounting electrical apparatus comprising a pivoting support

(30) Priorité: 07.03.2002 FR 0202894
(43) Date de publication de la demande: 10.09.2003
(73) Titulaire: Legrand France, 87000 Limoges (FR); Legrand SNC, 87000 Limoges (FR)
(72) Inventeur: Adam, Damien, 72240 Domfront en Champagne (FR)
(74) Mandataire: Santarelli

(56) Documents cités:
- EP-A- 0 600 109
- EP-A- 0 837 535
- EP-A- 1 094 583

## Description

La présente invention concerne un dispositif de montage d'appareillages électriques comprenant un support d'appareillages électriques présentant une face avant globalement plane et un socle qui porte en saillie au moins un montant, ledit support et ledit montant comportant des moyens d'assemblage complémentaires pour le montage dudit support à l'extrémité libre dudit montant.

On connaît déjà du document FR 2 786 618 un dispositif de montage du type précité dans lequel le support d'appareillages électriques est encliqueté de manière fixe au sommet de quatre colonnes qui s'élèvent perpendiculairement au socle.

L'inconvénient principal d'un tel dispositif de montage réside dans le fait que l'accès, après le montage du support d'appareillages électriques sur le socle, au mécanisme d'appareillage situé à l'arrière dudit support est difficile et nécessite souvent le démontage complet de celui-ci.

Afin de remédier aux inconvénients précités de l'état de la technique, l'invention propose un dispositif de montage tel que défini en introduction, caractérisé en ce que lesdits moyens d'assemblage complémentaires comprennent des moyens de pivotement dudit support par rapport au montant autour d'un axe qui s'étend parallèlement au plan de la face avant dudit support.

D'autres caractéristiques avantageuses et non limitatives du dispositif de montage selon l'invention sont les suivantes :
- lesdits moyens d'assemblage complémentaires comprennent des moyens d'encliquetage dudit support sur ledit montant ;
- ledit support comporte à ses quatre coins lesdits moyens d'assemblage, et ledit socle porte en saillie au moins deux montants en vis-à-vis pourvus à leur extrémité libre desdits moyens d'assemblage complémentaires de sorte que ledit support est articulé sur chacun des deux montants en vis-à-vis ;
- ledit socle porte en saillie quatre colonnes formant montants, qui portent à leur sommet lesdits moyens d'assemblage pour le montage à pivotement dudit support d'appareillages électriques ;
- lesdits moyens d'assemblage complémentaires comprennent, sur une des deux pièces que constituent le support d'appareillages électriques et ledit montant, un arbre et, sur l'autre des deux pièces, un logement destiné à recevoir ledit arbre, ce logement présentant un fond arrondi sur lequel glisse la surface externe de l'arbre pour pivoter ;
- l'arbre présente une section circulaire ;
- l'arbre présente une section circulaire tronquée par deux méplats parallèles ;
- l'arbre s'étend transversalement dans une fenêtre prévue dans ladite pièce ;
- ledit logement présente une forme en U dont la largeur est légèrement supérieure au plus grand diamètre de la section dudit arbre et s'ouvre vers l'extérieur par une embouchure d'entrée évasée, la largeur dudit logement à la jonction avec l'embouchure d'entrée étant légèrement inférieure au plus grand diamètre de la section dudit arbre ;
- ledit support d'appareillages électriques comporte sur une face tournée vers le socle, le long d'un de ses côtés longitudinaux, un logement destiné à accueillir une diode d'éclairage et des moyens de retenue de ladite diode, le fond dudit logement étant, au droit de l'emplacement de ladite diode, percé d'un orifice débouchant sur la face avant dudit support tournée à l'opposé du socle ; et
- lesdits moyens de retenue de la diode d'éclairage sont des moyens d'encliquetage.

La description qui va suivre en regard des dessins annexés, donnés à titre d'exemples non limitatifs, fera bien en comprendre en quoi consiste l'invention et comment elle peut être réalisée.

Sur les dessins annexés :
- la figure 1 est une vue schématique en perspective de dessus d'un dispositif de montage selon l'invention ;
- la figure 2 est une vue en coupe longitudinale d'un sommet d'une colonne portée par le socle de la figure 1 sur lequel est monté, en position relevée, le support d'appareillages électriques de la figure 1 ; et
- la figure 3 est une vue identique à celle de la figure 2 dans laquelle le support d'appareillages électriques est positionné en position abaissée.

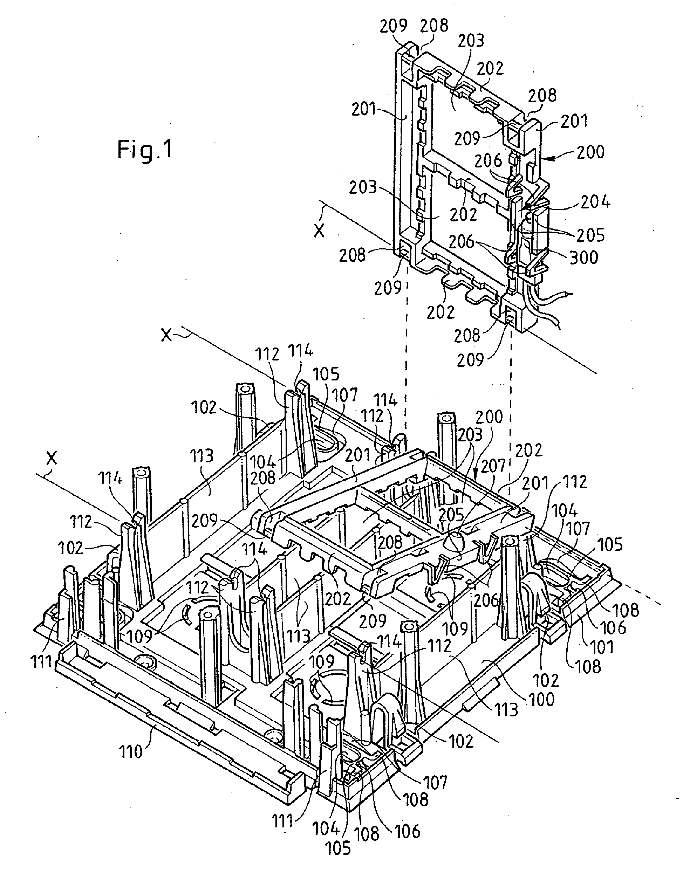

Sur la figure 1, on a représenté un dispositif de montage d'appareillages électriques comprenant un socle 100 formant le fond d'un boîtier pour appareillages électriques.

Ce socle 100 se présente sous la forme d'une platine et permet la fixation du boîtier à une quelconque paroi.

Pour l'essentiel, ce socle 100 est de forme carrée et est destiné à recevoir un capot de fermeture (non représenté) dont le bord périphérique s'adapte au bord périphérique 101 dudit socle 100.

Il comporte, sur deux bords parallèles, des clips 102 destinés à l'encliquetage du capot de fermeture non représenté.

Le socle 100 est destiné à être rapporté sur une paroi (non représentée) en sortie d'une installation électrique encastrée ou le long d'une goulotte de cheminement de câbles ou de conducteurs électriques (non représentée).

Il peut également s'agir d'un boîtier à poser en saillie sur une paroi, alimenté par des câbles, avec ou sans conduit, également posés en saillie sur la paroi.

Ce socle 100 comporte, au droit de chaque logement pour appareillages électriques, des prédécoupes 109 disposées en cercle.

Lorsque ce socle 100 est destiné à être monté en sortie d'une installation électrique encastrée, les prédécoupes 109 sont cassées par l'installateur de manière à créer des ouvertures d'entrée de conducteurs ou de câbles électriques à l'intérieur du boîtier en vue de leur raccordement aux appareillages électriques concernés et placés dans lesdits logements.

En outre, sur un autre bord de la platine (perpendiculaire aux bords parallèles portant les clips 102), il est prévu des agencements 110, 111 pour le montage d'un auvent pour le raccordement de l'intérieur du boîtier à l'intérieur d'un socle de goulotte, lorsque ledit socle 100 de boîtier est positionné le long d'une goulotte.

Ces agencements, comprennent, d'une part, une plate-forme 110 s'étendant dans le plan dudit socle 100 en saillie de son bord, et, d'autre part, deux colonnes 111 s'élevant perpendiculairement au plan du socle 100, disposées de part et d'autre de ladite plate-forme 110 et comportant une ouverture longitudinale formant un moyen de rainure pour la mise en place de l'auvent non représenté. Le socle 100 formant le fond du boîtier comporte, en outre, à ses quatre coins, quatre trous 104 pour la fixation du boîtier à une paroi.

Chaque trou 104 présente une forme allongée, ici une forme oblongue. Ces trous 104 sont disposés deux à deux sur une même ligne de sorte qu'ils s'étendent l'un vers l'autre.

Dans chacun de ces trous est destiné à s'engager un organe de fixation du boîtier apte à venir s'ancrer dans la paroi considérée.

Avantageusement, chaque trou 104 appartient à un plot 105 rattaché au socle 100 du boîtier par une liaison souple 106 autorisant un léger décalage du trou 104 parallèlement au plan du socle 100, selon une direction transversale à la direction d'allongement du trou, par rapport à une position d'origine stable.

Chaque liaison souple 106 rattachant un plot 105 au socle 100 est ici constituée par une languette flexible apte à se courber pour décaler ledit plot vers la gauche ou vers la droite de sa position d'origine stable. Chaque plot 105 vient de formation avec chaque languette flexible 106 associée qui vient elle-même de formation par moulage d'une matière plastique avec le socle 100.

Plus particulièrement, chaque plot 105 se trouve placé à une extrémité libre de ladite languette flexible constituant la liaison souple 106 en s'étendant librement vers l'intérieur du socle 100 dans une ouverture 107 prévue dans ledit socle.

Ici, chaque ouverture 107 présente une forme globalement en Ω, le bord de l'ouverture 107, auquel est rattaché le plot 105 par la liaison souple 106, étant parallèle à un bord du socle 100.

Comme le montre la figure 1, chaque plot 105 porte, de part et d'autre de la liaison souple 106, des butées 108 qui s'étendent selon une direction transversale à la direction d'allongement du trou 104 correspondant dans une partie rectangulaire de l'ouverture 107.

Les butées 108 viennent de formation avec chaque plot 105 par moulage d'une matière plastique.

Ces butées 108 sont aptes à venir en appui contre une partie du socle 100 du boîtier, pour plaquer le socle 100 contre la paroi.

Avantageusement, le dispositif de montage d'appareillages électriques comprend, outre ledit socle, un support d'appareillages électriques 200 (voir figure 1).

Le socle 100 porte en saillie des montants 112, et ledit support 200 ainsi que les montants 112 comportent des moyens d'assemblage complémentaires 208, 209, 114 pour le montage dudit support 200 à l'extrémité libre de chaque montant 112.

En pratique, le socle 100 porte en saillie deux jeux de quatre colonnes 112 formant montants qui portent à leur sommet lesdits moyens d'assemblage 114 pour le montage dudit support d'appareillages électriques 200.

Pour chaque jeu, les colonnes 112 sont disposées aux quatre coins d'un rectangle et sont reliées deux à deux entre elles par des cloisons 113, lesdites cloisons 113 délimitant entre elles lesdits logements pour appareillages électriques.

Chaque jeu de quatre colonnes 112 accueille un support d'appareillages électriques 200 qui présente ici une forme rectangulaire ajustée au positionnement des colonnes 112 correspondantes.

Plus particulièrement, chaque support d'appareillages électriques 200 se présente sous la forme d'un cadre rectangulaire à deux fenêtres 203 avec des montants longitudinaux 201 reliés par des traverses 202.

Ledit support d'appareillages électriques 200 présente une face avant, tournée à l'opposé du socle 100, qui est sensiblement plane.

Un appareillage électrique (non représenté) est destiné à être rapporté dans chacune des fenêtres 203 dudit support d'appareillages électriques 200.

Aux quatre coins de chaque support d'appareillages électriques 200, il est prévu lesdits moyens d'assemblage 208, 209, chacun de ces moyens d'assemblage coopérant avec les moyens d'assemblage prévus à un sommet d'une colonne 112 portée en saillie par le socle 100.

Avantageusement, les moyens d'assemblage complémentaires prévus sur les colonnes 112 du socle 100 et sur le support d'appareillages électriques 200 comprennent des moyens de pivotement dudit support 200 par rapport auxdites colonnes 112 formant montants autour d'un axe X qui s'étend parallèlement au plan de ladite face avant dudit support 200.

Selon le mode de réalisation préférentiel représenté, les moyens d'assemblages prévus aux quatre coins de chaque support d'appareillages électriques 200 sont identiques de sorte que ledit support est articulé sur chaque couple de colonnes 112 en vis-à-vis. Ainsi, chaque support d'appareillages électriques 200 peut être articulé de la droite vers la gauche ou de la gauche vers la droite en fonction des besoins d'accès de l'installateur.

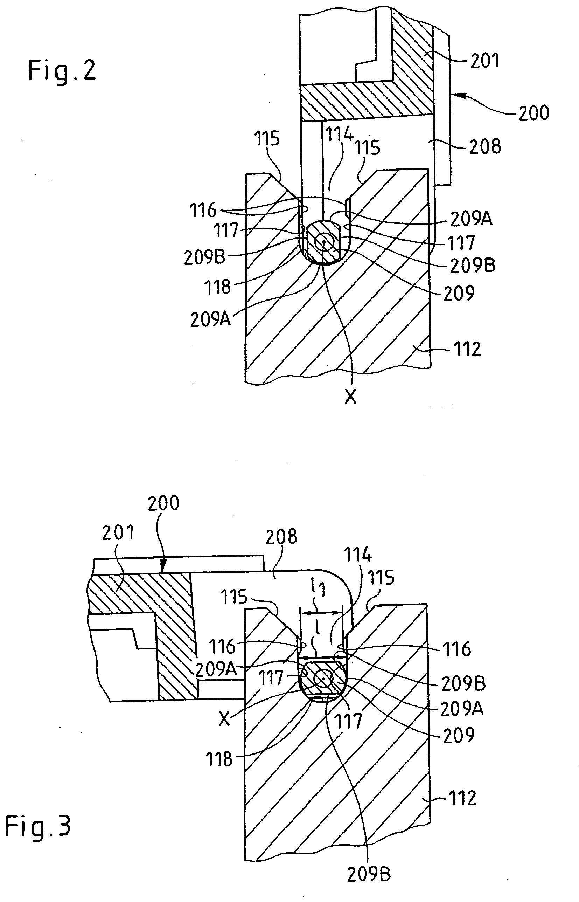

Plus particulièrement, selon l'exemple représenté, et comme le montrent les figures 2 et 3, lesdits moyens d'assemblage complémentaires comportent, ici, à chaque coin du support d'appareillages électriques 200, un arbre 209 et, sur chaque colonne 112, un logement 114 destiné à recevoir ledit arbre 209, ce logement 114 présentant un fond arrondi 118 sur lequel glisse la surface externe 209A de l'arbre 209 pour pivoter.

Bien entendu, en variante, on pourrait prévoir que, de façon inversée, le support d'appareillages électriques 200 comporte, à chacun de ses coins, un logement, et que l'arbre soit porté par le sommet d'une colonne prévue en saillie dudit socle.

Ainsi, comme le montre plus particulièrement la figure 1, les arbres 209 dudit support 200 sont alignés deux à deux selon l'axe X de pivotement de ce dernier.

Ici, chaque arbre 209 du support d'appareillages électriques 200 s'étend transversalement dans une fenêtre 208.

Selon le mode de réalisation représenté sur les figures 2 et 3, chaque arbre 209 présente une section circulaire tronquée par deux méplats 209B parallèles. Cette configuration de chaque arbre 209 permet de faciliter son introduction dans chaque logement 114.

Toutefois, selon une variante non représentée, on pourrait prévoir que chaque arbre 209 présente une section circulaire.

Le logement 114 prévu au sommet de chaque colonne 112 (voir figures 2 et 3) présente avantageusement une forme en U, avec un fond arrondi 118 à partir duquel s'élèvent deux parois latérales parallèles 117, dont la largeur l est légèrement supérieure au plus grand diamètre de la section de l'arbre 209 correspondant.

En outre, chaque logement 114 s'ouvre vers l'extérieur par une embouchure d'entrée 115 évasée facilitant l'introduction de chaque arbre dans ledit logement.

Avantageusement, à la jonction 116 entre lesdites parois latérales parallèles 117 et l'embouchure d'entrée 115 évasée, le logement 114 présente une largeur l1 légèrement inférieure au plus grand diamètre de la section dudit arbre 209.

Ainsi, lesdits moyens d'assemblage complémentaires, prévus aux sommets des colonnes 112 du socle 100 et sur le support d'appareillages électriques 200, forment des moyens d'encliquetage dudit support 200 sur lesdites colonnes 112.

Plus particulièrement, comme le montre la figure 2, le support d'appareillages électriques 200 est engagé dans deux premières colonnes 112 en étant positionné perpendiculairement au socle 100 de telle sorte que les méplats 209B de ses arbres 209 soient alignés avec l'axe longitudinal des logements 114 correspondants.

A cet effet, les méplats 209B de chaque arbre 209 facilitent son introduction dans le logement 114 correspondant.

Puis, le support d'appareillages électriques 200 est pivoté autour de l'axe X en direction des deux autres colonnes 112 disposées en vis-à-vis des deux premières colonnes 112 pour être positionné parallèlement au socle 100, et les autres arbres 209, portés par le support d'appareillages électriques à l'opposé de ceux déjà engagés dans les premiers logements 114, s'engagent à force ou par encliquetage dans les logements 114 des autres colonnes 112 correspondantes.

En effet, dans ce cas, lesdits autres arbres 209 dudit support 200 se présentent face auxdits logements 114 correspondants avec leurs méplats 209B s'étendant transversalement à l'axe longitudinal desdits logements (comme cela est représenté sur la figure 3). Ainsi, la plus grande largeur de chaque arbre 209 doit passer en force au travers de la plus petite largeur l1 du logement 114 correspondant.

Lorsque le support d'appareillages électriques 200 est monté au sommet des quatre colonnes 112 correspondantes portées le socle 100, son extraction nécessite un désencliquetage à force de celui-ci.

Selon une caractéristique particulièrement avantageuse du dispositif de montage selon l'invention, le support d'appareillages électriques 200 comporte sur une face arrière tournée vers le socle 100, le long d'un de ses côtés longitudinaux, c'est-à-dire sur un de ses montants longitudinaux 201, deux parois parallèles 205 en saillie délimitant un logement 204 destiné à accueillir une diode d'éclairage 300 formant un témoin lumineux du fonctionnement du ou des mécanismes d'appareillages électriques portés par ledit support 200. Le logement 204 est pourvu également de moyens de retenue de ladite diode 300.

En outre, le fond du logement 204 comporte, au droit de l'emplacement de ladite diode 300, un orifice 207 débouchant sur la face avant dudit support 200 tournée à l'opposé du socle 100.

Ainsi, les rayons lumineux émis par la diode d'éclairage 300 traversent l'orifice 207 pour être visibles depuis l'extérieur lors du fonctionnement de l'appareillage électrique concerné.

Les moyens de retenue de la diode d'éclairage 300 sont préférentiellement des moyens d'encliquetage constitués ici par des tourelles 206 positionnées à l'extrémité des deux parois parallèles 205 délimitant le logement 204 de la diode d'éclairage 300. A cet effet, on remarquera qu'il est prévu, à chaque extrémité desdites parois 205, une paire de tourelles 206 pour le montage à droite ou à gauche de la diode d'éclairage 300.

Ainsi, après avoir monté le support d'appareillages électriques 200 sur les colonnes 112 du socle 100 du dispositif de montage, un installateur peut avoir accès à l'arrière des mécanismes d'appareillages portés par ledit support 200 en désencliquetant ce dernier à une extrémité et en le faisant pivoter à son autre extrémité dans le logement 114 pour le positionner perpendiculairement au socle 100 (voir figure 2), voire à 180° par rapport audit socle.

Ce montage à pivotement peut également permettre avantageusement d'avoir accès à la diode d'éclairage 300 pour la remplacer.

Ici, le support d'appareillages électriques 200 étant prévu pour supporter deux mécanismes d'appareillages, le pivotement vers la droite ou vers la gauche du support 200 est particulièrement avantageux pour avoir accès à l'un ou l'autre des mécanismes d'appareillages qu'il supporte.

## Revendications

1. Dispositif de montage d'appareillages électriques comprenant un support d'appareillages électriques (200) présentant une face avant globalement plane et un socle (100) qui porte en saillie au moins un montant (112), ledit support (200) et ledit montant (112) comportant des moyens d'assemblage complémentaires (208, 209 ; 114) pour le montage dudit support (200) à l'extrémité libre dudit montant (112), **caractérisé en ce que** lesdits moyens d'assemblage complémentaires comprennent des moyens de pivotement (209A, 118) dudit support (200) par rapport au montant (112) autour d'un axe (X) qui s'étend parallèlement au plan de la face avant dudit support (200).

2. Dispositif de montage selon la revendication 1, **caractérisé en ce que** lesdits moyens d'assemblage complémentaires comprennent des moyens d'encliquetage (209, 115, 116) dudit support (200) sur ledit montant (112).

3. Dispositif de montage selon l'une des revendications 1 ou 2 dans lequel ledit support d'appareillages électriques (200) présente une forme rectangulaire, **caractérisé en ce que** ledit support (200) comporte à ses quatre coins lesdits moyens d'assemblage (208, 209) et ledit socle (100) porte en saillie au moins deux montants (112) en vis-à-vis pourvus à leur extrémité libre desdits moyens d'assemblage complémentaires (114) de sorte que ledit support (200) est articulé sur chacun des deux montants (112) en vis-à-vis.

4. Dispositif de montage selon l'une des revendications 1 à 3, **caractérisé en ce que** ledit socle (100) porte en saillie quatre colonnes (112) formant montants, qui portent à leur sommet lesdits moyens d'assemblage (114) pour le montage à pivotement dudit support d'appareillages électriques (200).

5. Dispositif de montage selon l'une des revendications 1 à 4, **caractérisé en ce que** lesdits moyens d'assemblage complémentaires comprennent, sur une des deux pièces que constituent le support d'appareillages électriques (200) et ledit montant (112), un arbre (209) et, sur l'autre des deux pièces, un logement (114) destiné à recevoir ledit arbre (209), ce logement (114) présentant un fond arrondi (118) sur lequel glisse la surface externe (209A) de l'arbre (209) pour pivoter.

6. Dispositif de montage selon la revendication 5, **caractérisé en ce que** l'arbre (209) présente une section circulaire.

7. Dispositif de montage selon la revendication 5, **caractérisé en ce que** l'arbre (209) présente une section circulaire tronquée par deux méplats (209B) parallèles.

8. Dispositif de montage selon l'une des revendications 5 à 7, **caractérisé en ce que** l'arbre (209) s'étend transversalement dans une fenêtre (208) prévue dans ladite pièce.

9. Dispositif de montage selon l'une des revendications 5 à 8, **caractérisé en ce que** ledit logement (114) présente une forme en U dont la largeur (l) est légèrement supérieure au plus grand diamètre de la section dudit arbre (209) et s'ouvre vers l'extérieur par une embouchure d'entrée (115) évasée, la largeur (l1) dudit logement (114) à la jonction (116) avec l'embouchure d'entrée (115) étant légèrement inférieure au plus grand diamètre de la section dudit arbre (209).

10. Dispositif de montage selon l'une des revendications 1 à 9, **caractérisé en ce que** ledit support d'appareillages électriques (200) comporte sur une face tournée vers le socle (100), le long d'un de ses côtés longitudinaux, un logement (204) destiné à accueillir une diode d'éclairage (300) et des moyens de retenue de ladite diode (300), le fond dudit logement (204) étant, au droit de l'emplacement de ladite diode (300), percé d'un orifice (207) débouchant sur la face avant dudit support (200) tournée à l'opposé du socle (100).

11. Dispositif de montage selon la revendication 10, **caractérisé en ce que** lesdits moyens de retenue de la diode d'éclairage (300) sont des moyens d'encliquetage (206).

## Patentansprüche

1. Vorrichtung zur Montage elektrischer Installationsgeräte, die einen Installationsgeräteträger (200) mit einer allgemein ebenen Vorderseite und einen Sockel (100) umfasst, der vorstehend wenigstens eine Stütze (112) aufweist, wobei der Träger (200) und die Stütze (112) komplementäre Verbindungsmittel (208, 209; 114) zur Montage des Trägers (200) am freien Ende der Stütze (112) aufweisen,
**dadurch gekennzeichnet, dass** die komplementären Verbindungsmittel Mittel (209A, 118) zum Schwenken des Trägers (200) bezüglich der Stütze (112) um eine parallel zur Ebene der Vorderseite des Trägers (200) verlaufenden Achse (X) umfassen.

2. Montagevorrichtung nach Anspruch 1,
**dadurch gekennzeichnet, dass** die komplementären Verbindungsmittel Mittel (209, 115, 116) zum Einrasten des Trägers (200) auf der Stütze (112) umfassen.

3. Montagevorrichtung nach einem der Ansprüche 1 oder 2, wobei der Installationsgeräteträger (200) eine rechteckige Form aufweist,
**dadurch gekennzeichnet, dass** der Träger (200) an seinen vier Ecken die Verbindungsmittel (209, 209) aufweist und der Sockel (100) vorstehend wenigstens zwei sich gegenüberliegende Stützen (112) trägt, die an ihrem freien Ende mit den komplementären Verbindungsmitteln (114) versehen sind, derart, dass der Träger (200) auf den beiden sich gegenüberliegenden Stützen (112) jeweils gelenkig lagert.

4. Montagevorrichtung nach einem der Ansprüche 1 bis 3,
**dadurch gekennzeichnet, dass** der Sockel (100) vorstehend vier Stützen bildende Pfeiler (112) trägt, die an ihrem Scheitelpunkt mit den Verbindungsmitteln (114) zur schwenkbaren Montage des Installationsgeräteträgers (200) versehen sind.

5. Montagevorrichtung nach einem der Ansprüche 1 bis 4,
**dadurch gekennzeichnet, dass** die komplementären Verbindungsmittel auf dem einen der beiden Teile, die den Installationsgeräteträger (200) und die Stütze (112) bilden, eine Welle (209) und auf dem anderen der beiden Teile eine Lagerung (114) zur Aufnahme der Welle (209) umfassen, wobei die Lagerung (114) einen abgerundeten Boden (118) aufweist, auf dem die Außenseite (209A) der Welle (209) zum Schwenken gleitet.

6. Montagevorrichtung nach Anspruch 5,
**dadurch gekennzeichnet, dass** die Welle (209) einen runden Querschnitt aufweist.

7. Montagevorrichtung nach Anspruch 5,
**dadurch gekennzeichnet, dass** die Welle (209) einen durch zwei parallele Abflachungen (209A) abgestumpften runden Querschnitt aufweist.

8. Montagevorrichtung nach einem der Ansprüche 5 bis 7,
**dadurch gekennzeichnet, dass** die Welle (209) in einer in dem Teil vorgesehenen Öffnung (208) quer verläuft.

9. Montagevorrichtung nach einem der Ansprüche 5 bis 8,
**dadurch gekennzeichnet, dass** die Lagerung (114) die Form eines U hat, dessen Breite (l) geringfügig größer ist als der größte Durchmesser des Querschnitts der Welle (209), und sich durch eine erweiterte Eingangsmündung (115) nach außen öffnet, wobei die Breite (11) der Lagerung (114) am Übergang zur Eingangsmündung (115) geringfügig kleiner ist als der größte Durchmesser des Querschnitts der Welle (209).

10. Montagevorrichtung nach einem der Ansprüche 1 bis 9,
**dadurch gekennzeichnet, dass** der Installationsgeräteträger (200) auf einer dem Sockel (100) zugewandten Seite entlang einer seiner Längsseiten eine Lagerung (204) zur Aufnahme einer Leuchtdiode (300) und von Mitteln zum Halten der Diode (300) umfasst, wobei der Boden der Lagerung (204) senkrecht zur Anordnung der Diode (300) mit einer Öffnung (207) durchbohrt ist, die in die dem Sockel abgewandte Vorderseite des Trägers (200) mündet.

11. Montagevorrichtung nach Anspruch 10,
**dadurch gekennzeichnet, dass** die Mittel zum Halten der Leuchtdiode (300) Rastmittel (206) sind.

## Claims

1. Device for mounting electrical equipment, comprising an electrical equipment holder (200) having a generally flat front face and a baseplate (100) that supports at least one projecting post (112), said holder (200) and said post (112) comprising complementary assembly means (208, 209; 114) for mounting said holder (200) on the free end of said post (112), **characterised in that** said complementary assembly means comprise means (209A, 118) for pivoting said holder (200) relative to the post (112) about an axis (X) that extends in parallel with the plane of the front face of said holder (200).

2. Mounting device according to claim 1, **characterised in that** said complementary assembly means comprise means (209, 115, 116) for snap-fitting said holder (200) onto said post (112).

3. Mounting device according to either claim 1 or claim 2, said electrical equipment holder (200) being rectangular, **characterised in that** the four corners of said holder (200) comprise said assembly means (208, 209), and said baseplate (100) supports at least two projecting posts (112) which face one another and the free ends of which are provided with said complementary assembly means (114) such that said holder (200) is hinged on each of the two posts (112) which face one another.

4. Mounting device according to any of claims 1 to 3, **characterised in that** said baseplate (100) supports four projecting columns (112) which form posts and the apices of which support said assembly means (114) for pivotably mounting said electrical equipment holder (200).

5. Mounting device according to any of claims 1 to 4, **characterised in that** said complementary assembly means comprise a shaft (209) on one of two parts, namely the electrical equipment holder (200) and said post (112), and a recess (114) for receiving said shaft (209) on the other of the two parts, said recess (114) having a rounded bottom (118) on which the external surface (209A) of the shaft (209) slides in order to pivot.

6. Mounting device according to claim 5, **characterised in that** the shaft (209) has a circular cross section.

7. Mounting device according to claim 5, **characterised in that** the shaft (209) has a circular cross section that is truncated by two parallel flats (209B).

8. Mounting device according to any of claims 5 to 7, **characterised in that** the shaft (209) extends transversely in a slot (208) provided in said part.

9. Mounting device according to any of claims 5 to 8, **characterised in that** said recess (114) has a U-shape, the width (l) of which is slightly larger than the largest diameter of the cross section of said shaft (209), and opens outwards by means of a flared entry opening (115), the width (l1) of said recess (114) at the junction (116) with the entry opening (115) being slightly smaller than the largest diameter of the cross section of said shaft (209).

10. Mounting device according to any of claims 1 to 9, **characterised in that** a face of said electrical equipment holder (200) that faces the baseplate (100) comprises, along one of the longitudinal edges of said holder, a recess (204) for accommodating an illumination diode (300) and means for retaining said diode (300), an aperture (207) that leads onto the front face of said holder (200), which faces away from the baseplate (100), passing through the bottom of said recess (204) to the right of the position of said diode (300).

11. Mounting device according to claim 10, **characterised in that** said means for retaining the illumination diode (300) are snap-fitting means (206).
